# FASCICULE DE BREVET EUROPEEN

(11) **EP 2 370 368 B1**
(45) Date de publication et mention de la délivrance du brevet: **20.03.2013**
(21) Numéro de dépôt: 09768161.3
(22) Date de dépôt: 09.11.2009
(51) Int. Cl.: C03B 9/16, C03B 9/193, C03B 9/41, C03B 40/027

(54) **SUBSTITUTION AUTOMATIQUE DE MOULES EBAUCHEURS DANS LA FABRICATION DE PRODUITS EN VERRE CREUX**
AUTOMATISCHER ERSATZ VON VORFORMEN BEI DER HERSTELLUNG VON HOHLGLASPRODUKTEN
AUTOMATIC SUBSTITUTION OF BLANK MOULDS IN THE MANUFACTURE OF HOLLOW GLASS PRODUCTS

(30) Priorité: 12.11.2008 FR 0857658
(43) Date de publication de la demande: 05.10.2011
(73) Titulaire: SAINT-GOBAIN EMBALLAGE, 92400 Courbevoie (FR)
(72) Inventeur: GHIONE, Samuele, I-15011 Acqui Terme (AL) (IT); ZANELLA, Evelino, I-17043 Carcare (SV) (IT)
(74) Mandataire: Cardin, Elise
(86) Numéro de dépôt international: PCT/FR2009/052151
(87) Numéro de publication internationale: WO 2010/055251

(56) Documents cités:
- EP-A- 0 635 459
- EP-A- 1 006 420
- FR-A- 2 901 551
- US-A1- 2008 152 750

## Description

La présente invention a trait à la fabrication de produits en verre creux, tels que bouteilles, flacons ou pots.

Cette fabrication met en oeuvre des machines I.S. (Individual Section), dans lesquelles chaque section est destinée à traiter une paraison ou plusieurs simultanément, chaque paraison étant reçue et traitée dans un moule ébaucheur, puis un moule finisseur dédiés.

Le moule ébaucheur est constitué de deux demi-moules définissant un plan de joint vertical.

Les deux demi-moules se referment sur un moule de bague alors situé à l'extrémité inférieure du moule ébaucheur.

Le moule ébaucheur comprend également un poinçon dont le profil détermine l'intérieur de la bague.

Le chargement de la paraison dans le moule ébaucheur est effectué par gravité, par son extrémité supérieure ouverte et surmontée d'un entonnoir.

Dans le procédé pressé-soufflé, ce chargement est effectué en position d'attente du poinçon. On ferme ensuite l'extrémité supérieure du moule ébaucheur par le fond puis le poinçon effectue un mouvement partant du moule de bague vers le haut, entraînant la paraison avec lui. Après avoir rempli le fond du moule (partie supérieure), le verre traverse les canaux de pressage pour former la bague.

Dans le procédé soufflé-soufflé, le chargement de la paraison est effectué en position haute du poinçon, cependant relativement court. L'extrémité supérieure du moule ébaucheur est reliée à un moyen pour la compression du fond de la paraison, ayant pour effet de former la bague. Puis cette extrémité supérieure est fermée par le fond ébaucheur, le poinçon est descendu et le perçage de l'ébauche est effectué par soufflage.

Le fond ébaucheur, et les deux demi-moules ébaucheurs sont ouverts, et l'ébauche tenue par le moule de bague est transférée dans le moule finisseur par retournement selon un axe horizontal.

Le formage de l'ébauche en produit fini s'accomplit en trois phases :
- allongement de l'ébauche sous son propre poids ;
- gonflage de l'ébauche allongée ;
- extraction de la bouteille.

Une source importante de défauts d'aspect à la surface du produit fini provient du contact relativement violent de la paraison avec la surface de l'empreinte du moule ébaucheur lors du chargement. Il est nécessaire, pour supprimer ces défauts, de veiller à la qualité de la surface de l'empreinte, ainsi que du glissement de la paraison sur la surface de l'empreinte, par des graissages périodiques de celle-ci.

Il est possible, dans certains cas, d'améliorer la qualité de la surface de l'empreinte par abrasion ou similaire. Cependant, quand cette qualité est trop détériorée, le remplacement du moule ébaucheur est nécessaire.

Ce remplacement est normalement effectué par un opérateur. Il nécessite bien entendu l'arrêt de la section concernée pendant une durée suffisante.

Les moules ébaucheurs sont lourds et relativement inaccessibles, de sorte que l'opérateur doit les porter dans une position de sa colonne vertébrale, inclinée vers l'avant, qui peut être à l'origine de tensions, douleurs ou lésions.

De plus l'opérateur travaille dans un environnement bruyant et à température élevée.

Le document FR 2 901 551 décrit une machine IS pour la fabrication d'objet en verre comprenant un robot pour le graissage des moules avec une ou plusieurs cannes de pulvérisation.

Le document EP 1 006 420 décrit une machine IS comprenant des sections indépendantes aptes à être remplacées manuellement.

Les inventeurs se sont donné pour but la conception d'un nouveau procédé dans lequel le remplacement d'un moule ébaucheur est effectué dans une durée minimale et sans occasionner les problèmes susmentionnés à l'opérateur.

Ce but est atteint par l'invention qui a pour objet un procédé de fabrication d'un produit en verre creux au moyen d'une machine I.S. et d'un robot mobile le long du côté moules ébaucheurs de celle-ci, caractérisé en ce que le robot est apte à remplacer un ou plusieurs moules ébaucheurs, section après section, porte un électro-aimant, et en ce que le remplacement d'un moule ébaucheur comporte
- la fermeture des deux demi-coquilles du moule ébaucheur en exerçant une pression,
- l'entrée en action de l'électro-aimant,
- le relâchement de la pression,
- puis le dégagement du moule ébaucheur.

Le robot est notamment adapté au remplacement de tous les moules ébaucheurs compris dans une section.

A cette fin, le robot porte de préférence un électro-aimant, ou autant d'électro-aimants qu'une section de la machine I.S. comporte de moules ébaucheurs. Ainsi de préférence, un électro-aimant est affecté au remplacement d'un moule ébaucheur, bien que l'invention n'exclue pas que plusieurs moules ébaucheurs puissent être remplacés simultanément par un seul électro-aimant, à condition que celui-ci ait une forme et des caractéristiques adaptées à cette fonction. Dans une autre réalisation avantageuse, le robot ne porte qu'un seul électro-aimant adapté au remplacement d'un seul moule ébaucheur à la fois, mais permettant le remplacement de plusieurs moules successivemnent.

De préférence, le robot est apte à porter plusieurs outils à fonctions différentes, simultanément et/ou alternativement. Un ou plusieurs de ces outils peuvent être amovibles.

Ainsi, selon des caractéristiques préférées du procédé de l'invention :
- le robot est apte à effectuer le graissage d'un ou plusieurs moules ébaucheurs, section après section, notamment par pulvérisation ;
- le robot est apte à mesurer des températures d'un ou plusieurs moules ébaucheurs, section après section, en particulier par le fait qu'il porte un pyromètre optique, une lunette infrarouge, ou équivalent (on contrôle le niveau de températures des moules ébaucheurs, et l'égalité de températures des deux demi-coquilles les constituant) ;
- le robot est apte à nettoyer l'empreinte d'un ou plusieurs moules ébaucheurs, section après section ; il porte par exemple à cet effet un outil abrasif tel qu'une brosse, entraîné en rotation ;
- le robot est apte à prendre des images d'un ou plusieurs moules ébaucheurs et finisseurs, section après section, et porte alors notamment une caméra associée à au moins un logiciel de traitement d'image ou de reconnaissance.

D'autre part l'invention a pour objet une machine I.S. pour la mise en oeuvre d'un procédé de fabrication de produits en verre creux décrit précédemment, comprenant un robot mobile le long du côté moules ébaucheurs, caractérisée en ce que
- le robot est apte à porter plusieurs outils à fonctions différentes, simultanément et/ou alternativement et
- le robot est apte à remplacer un ou plusieurs moules ébaucheurs, section après section,
- le robot porte un électro-aimant affecté au remplacement d'un ou plusieurs moules ébaucheurs.

Ces outils sont choisis de préférence parmi une canne de graissage par pulvérisation, et/ou un pyromètre optique, une lunette infrarouge ou équivalent et/ou un outil abrasif rotatif et/ou une caméra ou équivalent.

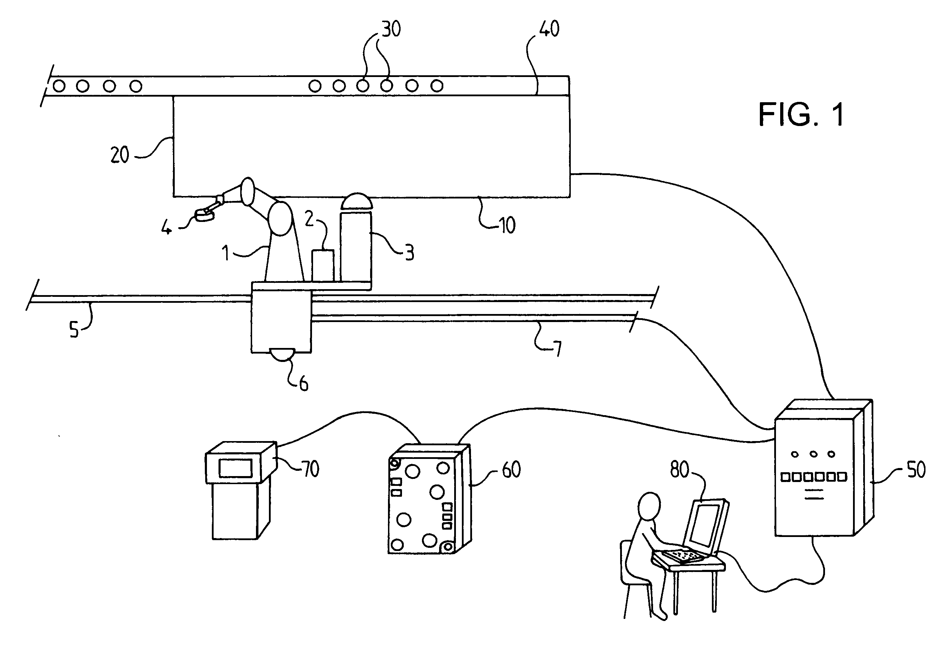

L'invention est maintenant illustrée par l'exemple suivant, se référant à la Figure 1 en annexe, qui est une représentation schématique générale du dispositif de remplacement de moule ébaucheur selon l'invention, relié à des interfaces utiles à son fonctionnement.

### Exemple

En référence à la Figure 1, un robot 1 à six axes de déplacement porte un électro-aimant 4, pour le remplacement d'un seul moule ébaucheur à la fois, de plusieurs successivement. Le robot 1 est disposé côté moules ébaucheurs 10 d'une machine I.S. 20. Des bouteilles 30 sont produites côté moules finisseurs 40 de la machine I.S. 20.

Une centrale 50 relie le robot 1 à la machine I.S. 20, permettant de commander les séquences d'activité du robot 1, et d'adapter un ou plusieurs cycles de fonctionnement de la section sur laquelle le robot 1 se trouve en intervention. La centrale 50 reçoit d'autre part de la machine I.S. 20 des informations telles qu'indication de défauts de bouteilles 30, susceptibles de déclencher l'intervention du robot 1 sur la section concernée.

La centrale 50 reçoit également des informations du robot 1 lui-même, telles que proximité d'un corps étranger déclenchant l'adaptation des mouvements ou l'arrêt du robot, ainsi que l'adaptation du fonctionnement de la machine I.S..

La centrale 50 est reliée à une cabine électrique 60 elle-même reliée à un calculateur 70, tous deux étant dédiés aux mouvements du robot.

Enfin la centrale 50 est reliée à un terminal 80 par lequel un opérateur peut examiner mais aussi intervenir sur le fonctionnement de l'ensemble.

Le robot 1 à six axes de déplacement est monté mobile en translation sur un rail 5 longeant le côté moules ébaucheurs d'une machine I.S. non représentée. Les différents câbles reliés au robot 1 (alimentation électrique, commande des mouvements du robot, alimentation en air comprimé...) sont réunis sur une chaîne porte-câbles 7 compensant la translation du robot 1.

Le robot 1 est équipé d'un détecteur 6 de corps étranger relié à un arrêt automatique. D'autre part, le bras robot a une fonction automatique de décélération qui réduit l'effet d'un contact éventuel, par exemple en cas de mauvais fonctionnement du détecteur 6.

Le robot 1 comprend un moteur 2 qui en assure la translation.

Il porte un électro-aimant 4 adapté au remplacement successif des deux moules ébaucheurs des sections de machines I.S. à double paraison. Le robot 1 comprend un réservoir d'huile 3 et une alimentation en air à 5 bar, destinés à être reliés à des cannes de pulvérisation non représentées, éventuellement amovibles, pour le graissage des moules ébaucheurs.

L'activité de l'électro-aimant 4 est maintenant décrite.

Le moule ébaucheur à remplacer est fermé conformément à un cycle spécial de la machine I.S.. Le bras du robot 1 portant l'électro-aimant 4 est positionné au-dessus du moule ébaucheur à remplacer.

Le bras du robot 1 est descendu jusqu'au moule ébaucheur encore fermé par application d'une pression et l'électro-aimant est activé.

La pression de fermeture du moule ébaucheur est éliminée.

Le moule ébaucheur est légèrement soulevé de façon à libérer les zones d'emboîtement.

Le porte-moule ébaucheur est ouvert, puis le moule ébaucheur est dégagé et déposé par désactivation de l'électro-aimant.

Pour la mise en place du nouveau moule ébaucheur, les opérations inverses sont effectuées.

On peut effectuer ensuite le remplacement de l'autre moule ébaucheur de la section, par le même procédé.

Le remplacement d'un moule ébaucheur peut être asservi à une détection de défauts sur les bouteilles 30, comme signalé précédemment. On peut également y procéder automatiquement à intervalles de temps réguliers ou après un nombre déterminé de cycles de la machine I.S..

D'autres remèdes à des défauts détectés sur les bouteilles sont disponibles.

Un premier remède consiste à graisser le moule ébaucheur, notamment à l'aide d'une canne de pulvérisation d'huile portée par le robot de manière éventuellement amovible, simultanément à l'électro-aimant et tous autres outils, ou alternativement.

Un second remède consiste à nettoyer l'empreinte du moule ébaucheur à l'aide d'un outil abrasif entraîné en rotation et également porté par le robot de manière éventuellement amovible, simultanément à tous autres outils ou alternativement.

De la même manière le robot est-il susceptible de porter, en plus ou alternativement, et de manière éventuellement amovible également :
- un ou plusieurs instruments de mesure de température (tels que pyromètre optique),
- une caméra ou deux (une par moule ébaucheur que comporte une section) associée(s) à au moins un logiciel de traitement d'image ou de reconnaissance pour repérer, par exemple, une position ouverte du moule, ou pour identifier ce dernier (numéros d'identification).

## Revendications

1. Procédé de fabrication d'un produit en verre creux (30) au moyen d'une machine I.S. (20) et d'un robot (1) mobile le long du côté moules ébaucheurs (10) de celle-ci, **caractérisé en ce que** le robot (1) est apte à remplacer un ou plusieurs moules ébaucheurs, section après section, porte un électro-aimant (4), et **en ce que** le remplacement d'un moule ébaucheur comporte
- la fermeture des deux demi-coquilles du moule ébaucheur en exerçant une pression,
- l'entrée en action de l'électro-aimant (4),
- le relâchement de la pression,
- puis le dégagement du moule ébaucheur.

2. Procédé selon la revendication 1, **caractérisé en ce que** le robot (1) est apte à porter plusieurs outils à fonctions différentes, simultanément et/ou alternativement.

3. Procédé selon l'une des revendications précédentes, **caractérisé en ce que** le robot (1) est apte à effectuer le graissage d'un ou plusieurs moules ébaucheurs, section après section, notamment par pulvérisation.

4. Procédé selon l'une des revendications précédentes, **caractérisé en ce que** le robot (1) est apte à mesurer des températures d'un ou plusieurs moules ébaucheurs, section après section.

5. Procédé selon la revendication 4, **caractérisé en ce que** le robot (1) porte un pyromètre optique, une lunette infrarouge, ou équivalent.

6. Procédé selon l'une des revendications précédentes, **caractérisé en ce que** le robot (1) est apte à nettoyer l'empreinte d'un ou plusieurs moules ébaucheurs, section après section.

7. Procédé selon la revendication 6, **caractérisé en ce que** le robot (1) porte un outil abrasif tel qu'une brosse, entraîné en rotation.

8. Procédé selon l'une des revendications précédentes, **caractérisé en ce que** le robot (1) est apte à prendre des images d'un ou plusieurs moules ébaucheurs et finisseurs, section après section.

9. Procédé selon la revendication 8, **caractérisé en ce que** le robot (1) porte une caméra associée à au moins un logiciel de traitement d'image ou de reconnaissance.

10. Machine I.S. (20) pour la mise en oeuvre d'un procédé de fabrication de produits en verre creux (30) selon la revendication 1, comprenant un robot (1) mobile le long du côté moules ébaucheurs (10), **caractérisée en ce que**
- le robot (1) est apte à porter plusieurs outils à fonctions différentes, simultanément et/ou alternativement et
- le robot (1) est apte à remplacer un ou plusieurs moules ébaucheurs, section après section,
- le robot (1) porte un électro-aimant (4) affecté au remplacement d'un ou plusieurs moules ébaucheurs.

11. Machine I.S. (20) selon la revendication 10, **caractérisée en ce que** lesdits outils sont choisis parmi une canne de graissage par pulvérisation, et/ou un pyromètre optique, une lunette infrarouge ou équivalent et/ou un outil abrasif rotatif et/ou une caméra ou équivalent.

## Claims

1. Process for manufacturing a hollow glass product (30) by means of an I.S. machine (20) and a robot (1) that can move alongside the blank molds (10) of said machine, **characterized in that** the robot (1) is capable of replacing one or more blank molds, section after section, and carries an electromagnet (4), and **in that** the replacement of a blank mold comprises:
- closing the two half-shells of the blank mold by exerting pressure;
- operating the electromagnet (4);
- releasing the pressure; and then
- disengaging the blank mold.

2. Process according to Claim 1, **characterized in that** the robot (1) is capable of carrying several tools having different functions, simultaneously and/or alternately.

3. Process according to either of the preceding claims, **characterized in that** the robot (1) is capable of greasing one or more blank molds, section after section, especially by spraying them.

4. Process according to one of the preceding claims, **characterized in that** the robot (1) is capable of measuring temperatures of one or more blank molds, section after section.

5. Process according to Claim 4, **characterized in that** the robot (1) carries an optical pyrometer, an infrared window, or the equivalent.

6. Process according to one of the preceding claims, **characterized in that** the robot (1) is capable of cleaning the impression of one or more blank molds, section after section.

7. Process according to Claim 6, **characterized in that** the robot (1) carries an abrasive tool, such as a brush, which is rotated.

8. Process according to one of the preceding claims, **characterized in that** the robot (1) is capable of taking images of one or more blank molds and finishing molds, section after section.

9. Process according to Claim 8, **characterized in that** the robot (1) carries a camera linked with at least one image processing or recognition software package.

10. I.S. machine (20) for implementing a process for manufacturing hollow glass products (30) according to Claim 1, comprising a robot (1) that can move alongside blank molds (10), **characterized in that**:
- the robot (1) is capable of carrying several tools having different functions, simultaneously and/or alternately; and
- the robot (1) is capable of replacing one or more blank molds, section after section; and
- the robot (1) carries an electromagnet (4) assigned to the replacement of one or more blank molds.

11. I.S. machine (20) according to Claim 10, **characterized in that** said tools are chosen from a spray tube for greasing and/or an optical pyrometer, an infrared window or equivalent and/or a rotary abrasive tool and/or a camera or equivalent.

## Patentansprüche

1. Verfahren zur Herstellung eines Hohlglasprodukts (30) mittels einer IS-Maschine (20) und eines entlang ihrer Vorformenseite (10) beweglichen Roboters (1), **dadurch gekennzeichnet, dass** der Roboter (1) geeignet ist, eine oder mehrere Vorformen, Sektion für Sektion, auszuwechseln, einen Elektromagneten (4) trägt und dass das Auswechseln einer Vorform umfasst
- das Schließen der beiden Halbschalen der Vorform durch Ausüben eines Druckes,
- der Einsatz des Elektromagneten (4),
- das Nachlassen des Druckes,
- anschließend das Lösen der Vorform.

2. Verfahren nach Anspruch 1, **dadurch gekennzeichnet, dass** der Roboter (1) geeignet ist, mehrere Werkzeuge mit unterschiedlichen Funktionen, gleichzeitig und/oder abwechselnd zu tragen.

3. Verfahren nach einem der vorstehenden Ansprüche, **dadurch gekennzeichnet, dass** der Roboter (1) geeignet ist, das Schmieren einer oder mehrerer Vorformen, Sektion für Sektion, insbesondere durch Sprühen zu vollziehen.

4. Verfahren nach einem der vorstehenden Ansprüche, **dadurch gekennzeichnet, dass** der Roboter (1) geeignet ist, Temperaturen von einer oder mehreren Vorformen, Sektion für Sektion zu messen.

5. Verfahren nach Anspruch 4, **dadurch gekennzeichnet, dass** der Roboter (1) ein optisches Pyrometer, ein Infrarot-Sichtgerät oder entsprechendes trägt.

6. Verfahren nach einem der vorstehenden Ansprüche, **dadurch gekennzeichnet, dass** der Roboter (1) geeignet ist, den Formhohlraum von einer oder mehreren Vorformen, Sektion für Sektion zu reinigen.

7. Verfahren nach Anspruch 6, **dadurch gekennzeichnet, dass** der Roboter (1) ein drehangetriebenes Schleifwerkzeug, wie eine Bürste, trägt.

8. Verfahren nach einem der vorstehenden Ansprüche, **dadurch gekennzeichnet, dass** der Roboter (1) geeignet ist, Bilder von einer oder mehreren Vor- und Fertigformen, Sektion für Sektion aufzunehmen.

9. Verfahren nach Anspruch 8, **dadurch gekennzeichnet, dass** der Roboter (1) eine Kamera trägt, die wenigstens einer Bildverarbeitungs- oder Erkennungssoftware zugeordnet ist.

10. IS-Maschine (20) für die Durchführung eines Verfahrens zur Herstellung von Hohlglasprodukten (30) nach Anspruch 1, umfassend einen entlang der Vorformenseite (10) beweglichen Roboter (1), **dadurch gekennzeichnet, dass**
- der Roboter (1) geeignet ist, mehrere Werkzeuge mit unterschiedlichen Funktionen, gleichzeitig und/oder abwechselnd zu tragen, und
- der Roboter (1) geeignet ist, eine oder mehrere Vorformen, Sektion für Sektion auszuwechseln,
- der Roboter (1) einen Elektromagneten (4) trägt, der für das Auswechseln einer oder mehrerer Vorformen bestimmt ist.

11. IS-Maschine (20) nach Anspruch 10, **dadurch gekennzeichnet, dass** die Werkzeuge aus einem Rohr zur Sprühschmierung und/oder einem optischen Pyrometer, einem Infrarot-Sichtgerät oder entsprechendem und/oder einem umlaufenden Schleifwerkzeug und/oder einer Kamera oder entsprechendem ausgewählt sind.
